**Europäisches Patentamt**

**European Patent Office**

**Office européen des brevets**

(19)

(11) Numéro de publication : **0 285 466 B1**

## (12) FASCICULE DE BREVET EUROPEEN

(45) Date de publication du fascicule du brevet :
**12.06.91 Bulletin 91/24**

(51) Int. Cl.⁵ : **D06F 39/02, B65D 41/26**

(21) Numéro de dépôt : **88400444.1**

(22) Date de dépôt : **26.02.88**

(54) **Dispositif doseur et distributeur d'un produit fluide.**

(30) Priorité : **04.03.87 FR 8702942**

(43) Date de publication de la demande :
**05.10.88 Bulletin 88/40**

(45) Mention de la délivrance du brevet :
**12.06.91 Bulletin 91/24**

(84) Etats contractants désignés :
**AT BE CH DE ES FR GB GR IT LI LU NL SE**

(56) Documents cités :
**EP-A- 0 109 704**
**EP-A- 0 152 359**
**EP-A- 0 201 376**
**GB-A- 962 002**
**US-A- 3 888 391**
**US-A- 4 014 105**

(73) Titulaire : **UNION GENERALE DE SAVONNERIE Société en nom collectif dite:**
**150, rue Galliéni**
**F-92100 Boulogne Billancourt (FR)**

(72) Inventeur : **D'Hooghe, Martial**
**11, clos des Genêts**
**13730 Saint-Victoret (FR)**
Inventeur : **Perrette, Claude**
**2, rue Jules Vernes**
**5100 Reims (FR)**
Inventeur : **Goffinet, Pierre**
**Villa "le Monteil" Chemin de la Puya**
**74000 Annecy (FR)**

(74) Mandataire : **Caunet, Jean et al**
**Cabinet BEAU DE LOMENIE 55, rue d'Amsterdam**
**F-75008 Paris (FR)**

## Description

La présente invention concerne un dispositif doseur et distributeur d'un produit fluide, à déposer librement dans l'enceinte mobile d'une machine.

Il est bien connu de distribuer un produit de conditionnement pendant un cycle de traitement au moyen d'un récipient sphérique contenant une dose de ce produit et placé librement dans l'enceinte de traitement avec les articles à traiter.

Ainsi, le brevet US 4.014.105 décrit un récipient sphérique dont la demi-coquille supérieure délimite des orifices de distribution et comporte un trou obturable de remplissage. Ce récipient est destiné à recevoir un agent adoucisseur et/ou antistatique liquide pour traiter du linge dans un séchoir automatique tournant.

La demande de brevet européen 0 152 359 décrit un récipient sphérique présentant des évents pour la libération progressive du liquide au sein du linge en cours de lavage. Le liquide est un agent détergent et il est versé dans le récipient avant utilisation par une cheminée plongeant à l'intérieur de ce récipient. L'extrémité libre de la cheminée peut être ouverte ou bien fermée par une paroi en présentant alors des trous latéraux, le remplissage de la cavité interne dudit récipient s'effectuant alors à travers l'ouverture extrême ou les trous latéraux de cette cheminée.

Le brevet US numéro 3.888.391 décrit un récipient sphérique contenant un agent adoucisseur liquide ou granuleux et destiné à le distribuer dans la cuve d'une machine à laver le linge pendant la phase de rinçage. Le récipient comporte alors un tube plongeur de remplissage et de distribution dont l'extrémité libre ouverte située à l'intérieur coopère avec une soupape lestée. Celle-ci est en matière élastique et, lorsqu'elle est tirée par l'utilisateur au moyen d'une attache souple à travers le tube plongeur, elle se verrouille élastiquement sur son siège en fermant ainsi l'ouverture de l'extrémité libre du tube. Pendant la phase de lavage du cycle, le récipient sphérique reste fermé et, pendant la phase intermédiaire d'essorage, la soupape s'ouvre automatiquement sous l'action du champ centrifuge intervenant principalement sur le lest et l'agent adoucisseur reste, sous l'action du même champ, dans le récipient. Pendant la phase du rinçage, ledit récipient est balloté avec le linge, ce qui provoque la distribution de l'agent adoucisseur qu'il contient à travers le tube plongeur dans le linge.

La demande de brevet européen 0 201 376 décrit essentiellement le montage sur un récipient de conditionnement d'un doseur-distributeur, de préférence sphérique, selon le brevet français 84/13 210 (page 9, lignes 24 à 28 de cette demande de brevet européen), brevet français auquel correspond la demande de brevet européen précitée 0 152 359. Cependant, le doseur-distributeur sphérique ne reçoit la dose de produit qu'après avoir été démonté du récipient de conditionnement (page 9, lignes 1 à 4 de ladite demande de brevet européen 0 201 376).

Par ailleurs, la représentation de la figure 11 induit une erreur. En effet, les évents ne sont pas représentés alors qu'ils devraient l'être, puisque, d'après le passage, page 7, lignes 27 à 33, l'agencement distributeur selon la variante de la figure 11 reprend la configuration générale de l'agencement distributeur selon la figure 10.

Etant admis que les évents existent bien près du bord extérieur de la cheminée, il est évident qu'en retournant le récipient muni du doseur on remplit complètement le doseur et qu'en redressant le récipient on vide complètement le doseur en transvasant son contenu dans ledit récipient.

Cela confirme ce qui est rappelé ci-dessus, à savoir que le doseur doit être démonté du récipient pour être rempli à la main.

L'inconvénient de ces divers récipients connus est qu'il est très difficile de doser la quantité de produit fluide versée dans le récipient avant usage. Concomitamment, l'opération de transvasement est malcommode et s'accompagne souvent de bavures sur le récipient et/ou la bouteille ou bidon formant conteneur du produit, ce qui nécessite d'essuyer récipient et conteneur après chaque dosage. Bien entendu, en raison de l'imprécision du dosage et des pertes au remplissage, la consommation de produit et excessive.

La présente invention a pour but de remédier cet inconvénient, en permettant un dosage précis et sans perte du produit dans le récipient qu'il soit sphérique ou présente une autre forme, ce dosage pouvant être facilement et rapidement exécuté.

Comme dans l'art antérieur, le récipient, de préférence sphérique, prévu pour contenir une dose de produit fait corps avec un tube plongeur, lequel présente une ouverture de remplissage et de distribution et est muni d'un moyen de branchement sur un conteneur tel qu'une bouteille, un bidon pour que le récipient soit disposé à l'extérieur du conteneur.

Dans le but précité et conformément à l'invention, le bord de la ou des ouvertures de remplissage et de distribution du tube plongeur, qui se trouve le plus haut placé lorsque le dispositif pend verticalement sous le moyen de branchement, est situé à un niveau qui détermine dans le récipient, lorsque le conteneur est retourné, la dose de produit à distribuer et ce récipient délimite autour dudit tube une réserve annulaire pour la distribution, réserve dans laquelle ladite dose est piégée lorsque ledit conteneur est redressé pour que ledit récipient soit situé au-dessus du moyen de branchement.

Ce dispositif est applicable que le produit soit liquide, pulvérulent ou granuleux... et peut être mis en oeuvre dans une machine à laver le linge, une machine à sécher le linge ou autre machine, pour être opérationnel pendant tout le cycle du traitement ou durant certaines phases sélectionnées seulement.

Le tube plongeur peut déboucher dans le récipient uniquement par son extrémité libre ou par des fenêtres latérales ou bien à la fois par son extrémité libre et des fenêtres latérales.

Par ailleurs, l'extrémité libre ouverte du tube plongeur peut coopérer avec une soupape lestée à fermeture élastique et ouverture commandée par la force centrifuge prenant naissance dans la cuve tournant en phase d'essorage.

Avantageusement, le récipient et le tube plongeur sont distincts, emboîtés l'un dans l'autre et reliés entre eux par l'intermédiaire d'une lèvre de verrouillage et d'étanchéité, faisant saillie sur l'un, déformable élastiquement et susceptible de pénétrer dans une gorge de l'autre.

Suivant une forme de réalisation particulière, le moyen de branchement est une simple tubulure prolongeant le tube plongeur et susceptible d'être emboîtée librement sur ou dans le col du conteneur.

Un verrou élastique peut être interposé entre la tubulure du tube plongeur et le col du conteneur, verrou qui peut être constitué par un bourrelet saillant discontinu de l'un susceptible d'être engagé dans une gorge de l'autre.

Suivant une autre forme de réalisation, le moyen de branchement est un raccord taraudé prolongeant le tube plongeur et susceptible d'être vissé sur le col fileté du conteneur.

Le raccord taraudé du tube plongeur peut être prolongé par une jupe de plus grand diamètre susceptible d'être emboîtée sur un capuchon taraudé de bouchage du conteneur lorsqu'il est vissé sur le col fileté de celui-ci, jupe et capuchon entre lesquels est interposé un verrou élastique pouvant être constitué par un bourrelet saillant discontinu de l'un susceptible d'être engagé dans une gorge de l'autre.

Pour assurer la fermeture du conteneur dès qu'une dose de produit est versée dans le récipient, divers moyens peuvent être mis en oeuvre quelle que soit la forme de réalisation choisie de ce récipient.

Sur le récipient, il est alors prévu qu'il présente sensiblement à l'opposé du moyen de branchement précité, un embout supplémentaire identique au col du conteneur et susceptible de recevoir le capuchon de bouchage de celui-ci.

Cet embout supplémentaire peut être un col débouchant dans le récipient, de façon que la distribution du produit puisse s'effectuer à travers ce col et/ou le tube plongeur ou bien ledit embout peut être fermé par un opercule pour que la distribution du produit s'effectue exclusivement à travers le tube plongeur.

Sur le conteneur, il est alors prévu que son goulot contient un clapet à fermeture automatique et ouverture commandée, le tube plongeur étant muni d'un poussoir fixe de longueur telle qu'il provoque l'ouverture de ce clapet lorsque son moyen de raccordement est en prise avec le goulot.

Avantageusement, le clapet comporte une cartouche tubulaire montée dans le goulot du conteneur et séparant une chambre périphérique d'une chambre centrale dans laquelle une coupelle est montée coulissante et repoussée par un ressort contre un siège entourant un passage obturable dans lequel peut prendre place le poussoir précité, la cartouche présentant au moins un ajourage qui met en communication un compartiment amont de la chambre centrale avec la chambre périphérique et celle-ci avec un compartiment aval de ladite chambre centrale, compartiments qui sont séparés par la coupelle et qui débouchent respectivement par un passage permanent dans le conteneur et par le passage obturable dans le récipient.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :

- la figure 1 est une demi-coupe, demi-élévation montrant une première forme de réalisation du récipient doseur et distributeur monté sur le goulot d'une bouteille d'approvisionnement disposée verticalement, fond en bas,

- la figure 2 est une vue analogue à la figure 1, illustrant cet ensemble : récipient-bouteille renversé avec le récipient en bas.

- la figure 3 est une vue analogue à la figure 1, avec l'ensemble redressé, le récipient étant situé en haut et contenant la dose de produit délivrée dans la position selon la figure 2,

- les figures 4 à 6 sont des vues analogues à la figure 1, représentant trois autres formes de réalisation du récipient doseur et distributeur,

- la figure 7 est une vue analogue à la figure 1, illustrant un autre mode d'exécution du moyen de branchement du récipient sur la bouteille, moyen qui peut se substituer à celui des quatre formes de réalisation précitées,

- la figure 8 est une vue analogue à la figure 1 représentant un moyen permettant de fermer la bouteille lorsque le récipient en est séparé pour utilisation,

- les figures 9 et 10 sont des vues analogues à la figure 1, montrant deux moyens particuliers qui permettent de fermer la bouteille dès que le récipient est démonté, quelle que soit la forme de réalisation de celui-ci.

- les figures 11 et 12 sont des demi-coupes de deux formes de réalisation d'un récipient selon l'invention dont la capacité de dosage est réglable,

1 désigne une bouteille, un bidon ou autre conteneur d'un produit 2,

1 et 3 un récipient dans lequel le produit est dosé.

Ce produit doit être fluide pour se comporter comme un liquide du point de vue de son écoulement et de son équilibre hydrostatique. Il peut s'agir d'un agent détergent, d'un agent de blanchiment, d'un agent assouplisseur, d'un agent antistatique ou autre pour traiter du linge dans une machine à laver ou à sécher.

Bien entendu, tout autre fluide peut être stocké, dosé et distribué comme indiqué dans ce qui suit en vue de son utilisation pour traiter un article autre que du linge dans un autre type de machine, du moment que le traitement s'effectue dans une enceinte mobile de cette machine qui remue et mélange ledit article avec le récipient doseur et distributeur 3.

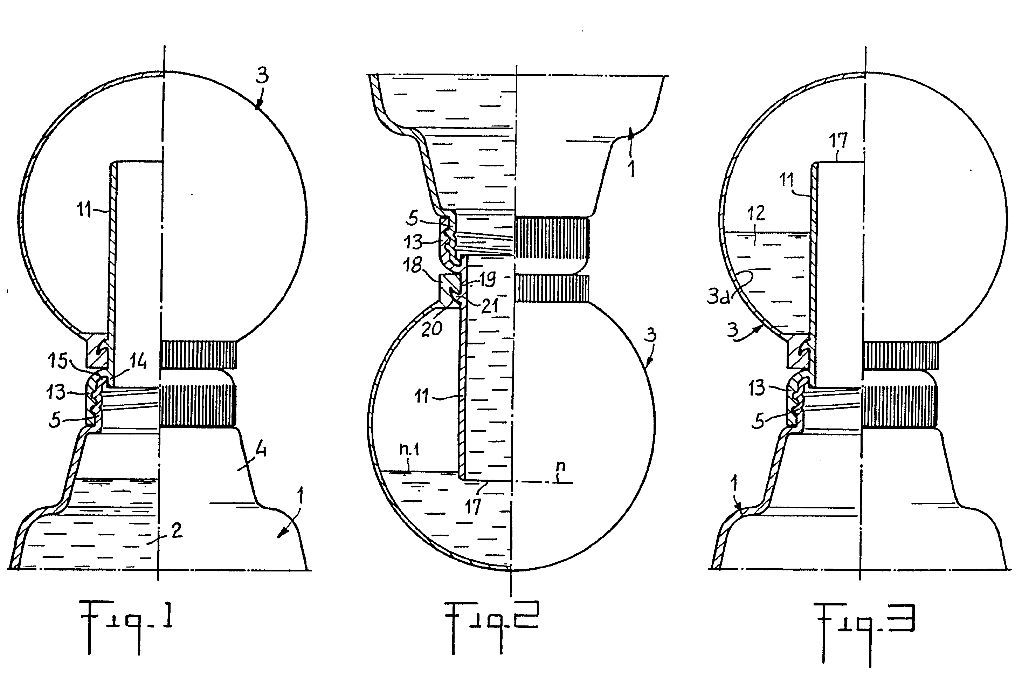

Suivant les formes de réalisation illustrées par les figures 1 à 3, 4, 5 et 6, la bouteille 1 comporte un goulot 4 se terminant par un col fileté 5 normalement fermé par un capuchon taraudé 6 (figures 8 et 9).

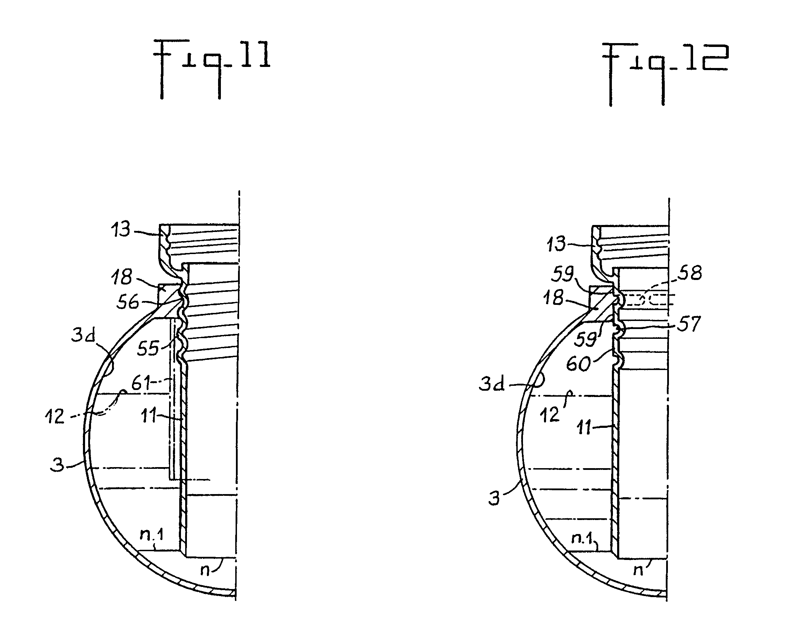

Suivant la forme de réalisation illustrée par la figure 7, le goulot 4 se termine par un col lisse 7, cylindrique ou tronconique, normalement fermé par un capuchon 8 représenté en trait mixte. Un verrou élastique est prévu entre eux et peut être constitué par une gorge 9 et un bourrelet discontinu 10 coopérant entre eux par emboîtement élastique. Dans l'exemple représenté, la gorge 9 est formée en creux dans le capuchon 8 et le bourrelet 10 en saillie sur le col 7 ; la disposition inverse peut être mise en oeuvre, à savoir avec la gorge sur le col et le bourrelet dans le capuchon.

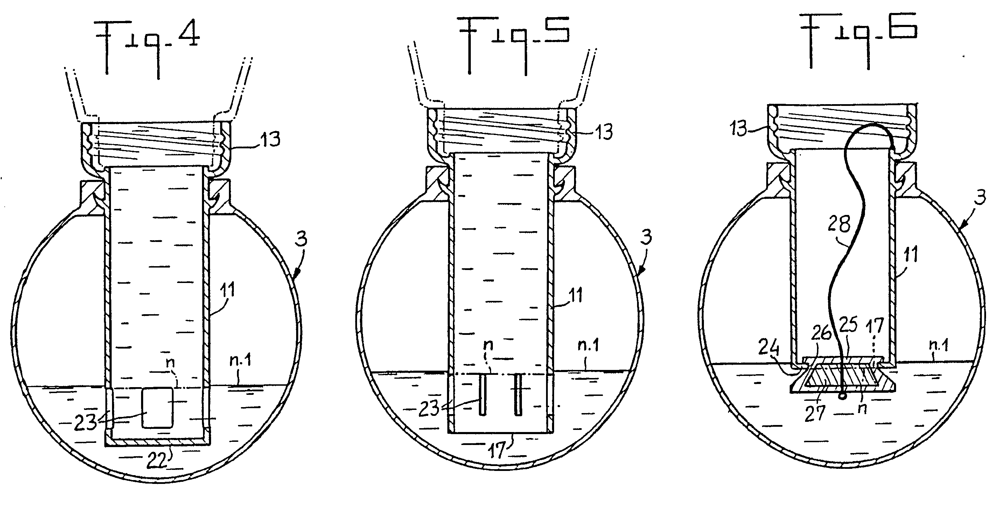

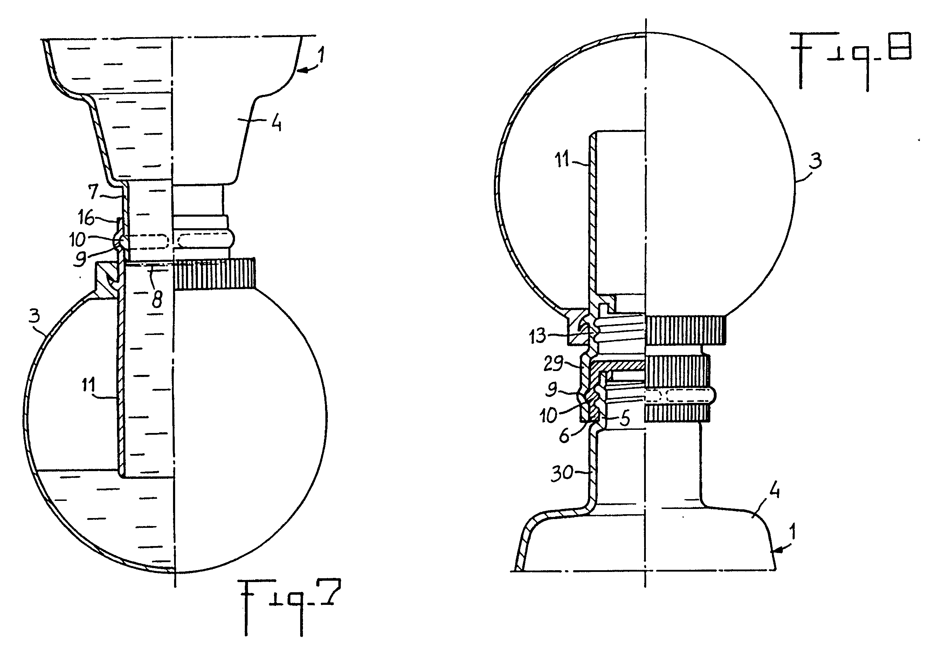

Dans toutes ces formes de réalisation selon les figures 1 à 10 notamment, le récipient 3 fait corps avec un tube plongeur 11 débouchant à l'extérieur pour être branché sur la bouteille 1 en vue de transvaser dans ce récipient, de la façon décrite dans ce qui suit, une dose 12 (figure 3) de produit. En position d'utilisation (figure 3), dans laquelle le tube plongeur 11 débouche à l'extérieur sous le récipient 3, la dose 12 est piégée dans une réserve annulaire 3 délimitée par ledit récipient autour dudit tube.

Ainsi que cela ressort des figures 1 à 6, 8, 9 et 10, le moyen de branchement peut être constitué par un raccord taraudé 13 venu de moulage avec le tube 11 et destiné à être vissé sur le col fileté 5 de la bouteille. L'extrémité libre 14 du tube fait saillie dans le raccord 13 afin de délimiter une gorge annulaire 15 dans laquelle s'insère le bord du col 5 pour la jonction étanche du récipient 3 avec la bouteille 1.

Comme le montre la figure 7, le moyen de branchement peut aussi être constitué par une tubulure 16 prolongeant le tube plongeur 11 et susceptible d'être emboîtée sur le col lisse 7 de la bouteille. Dans l'exemple représenté, une gorge 9 est formée en creux dans la tubulure 16 et coopère avec le bourrelet discontinu (10) de verrouillage élastique que présente en saillie le col lisse 7.

La tubulure 16 est conformée en correspondance avec le col 7. Dans cet exemple, elle est cylindrique; mais rien ne s'oppose à ce qu'elle soit tronconique. En outre, la tubulure peut être engagée dans le col au lieu d'être emboîtée sur ; dans ce cas cependant, un moyen d'étanchéité, telle qu'une lèvre déformable, un joint..., semble souhaitable pour éviter les fuites lors du retournement de la bouteille décrit dans ce qui suit. Par ailleurs, et indépendamment du mode de montage de la tubulure relativement au col, les éléments 9, 10 du verrou élastique peuvent être inversés et ce verrou peut être d'un autre type : à jonc fendu, à billes...

Bien entendu, d'autres moyens peuvent être mis en oeuvre pour assurer le raccordement et l'étanchéité du col de la bouteille avec le capuchon de fermeture ou le tube plongeur du récipient 3. Par exemple, un système à baïonnette ou à genouillère avec joint torique ou en forme de rondelle peut être prévu.

Quel que soit le moyen de branchement 13, 16... mis en oeuvre, sur le tube plongeur 11 ou le récipient 3, ce tube plonge dans le récipient 3 jusqu'à un niveau n (figure 2) qui détermine la dose 12 de produit à distribuer.

Pour bien faire comprendre cela, l'exposé qui suit se réfère à la première forme de réalisation et au mode opératoire illustré en ce qui la concerne par les figures 1 à 3.

La bouteille 1 étant disposée verticalement avec le goulot 4 en haut, le capuchon 6 est dévissé et le raccord 13 du récipient 3 est vissé à sa place sur le col fileté 5 (figure 1). S'il s'agit du mode de branchement selon la figure 7, le capuchon 8 est démonté et la tubulure 16 est emboîtée et verrouillée élastiquement à sa place sur le col lisse 7.

L'ensemble ainsi constitué par la bouteille 1 et le récipient 3 est alors retourné (figure 2) et le produit s'écoule à travers le tube plongeur 11 dans ledit récipient jusqu'à ce qu'il atteigne un niveau n.1. Ce niveau n.1 est situé légèrement au-dessus du niveau n qui, dans cette première forme de réalisation selon les figures 1 à 3, est celui de l'ouverture 17 de l'extrémité libre du tube 11 débouchant directement dans le récipient 3. Si p.1 est la pression de l'air dans la cavité du récipient 3 au-dessus de la surface libre du produit, p.2 est la pression de l'air dans la bouteille 1 au-dessus de la surface libre du produit et p est la pression hydrostatique de la colonne de produit dans cette bouteille :

$$p.1 = p.2 + p$$

Cet équilibre applicable surtout aux liquides est atteint d'une façon semblable à ce qui se produit dans les fontaines à oiseaux, à la seule différence près que dans celles-ci p.1 est la pression atmosphérique alors que dans le récipient 3, p.1 est légèrement supérieure à la pression atmosphérique.

De toute façon, lorsque l'équilibre est atteint, le niveau n.1 est un peu plus élevé que le niveau n, mais il varie peu suivant que la bouteille est pleine avant retournement ou qu'elle est presque vide.

L'ensemble 1, 3 est ensuite redressé (figure 3) suivant un mouvement approprié pour que pendant ce mouvement, le produit parvenu dans le récipient 3 ne retourne pas par le tube 11 dans la bouteille 1 et qu'au moment ou ledit tube se débouche, du produit de cette bouteille ne s'écoule pas vers le récipient. Le produit ainsi piégé dans ce récipient constitue une dose 12 et prend place dans une réserve annulaire 3 d (figure 3) dudit récipient qui entoure le tube 11.

Le récipient 3 peut alors être démonté de la bouteille 1 et déposé, en restant dans la position de la figure 3, sur le linge se trouvant dans la cuve de la machine à laver ou à sécher.

Lorsque la cuve est entraînée en rotation, le récipient 3 est balloté et distribue la dose 12 de produit qu'il contient, dans le linge d'une façon progressive aléatoire à travers le tube plongeur 11.

L'expérience a montré que les opérations de dosage et de distribution sont exécutées dans d'excellentes conditions lorsque le récipient présente une forme sphérique avec certaines proportions. En effet, cette forme favorise le piégeage de la dose 12 sans échange avec la bouteille lors du redressement de celle-ci ; elle permet également, lors du ballotage du récipient 3 qui résulte du mouvement de la cuve de la machine, d'engendrer une animation aléatoire de la dose, animation grâce à laquelle la distribution de cette dose à travers le tube plongeur est elle-même aléatoire et répartie dans le temps.

Mais il est bien évident que d'autres formes peuvent convenir comme par exemple :

– celle d'un cylindre de section elliptique, voire circulaire,

– celle d'une ellipsoïde,

– celle d'un polyèdre à bords et coins arrondis, tel qu'un cube, etc...

Ainsi que cela est indiqué dans ce qui précède, le récipient 3 fait corps avec le tube plongeur 11. Il s'agit donc d'un doseur distributeur monolithique.

Dans les formes de réalisation choisies et représentées, le récipient 3 et le tube plongeur 11 sont fabriqués en matière plastique indépendamment l'un de l'autre et assemblés définitivement entre eux lors du montage. A cet effet, le récipient 3 comporte une collerette épaisse 18 délimitant un alésage 19 dans lequel débouche une gorge 20. Cette gorge est prévue pour recevoir une lèvre 21 de verrouillage et d'étanchéité faisant saillie sur le tube plongeur 11, lorsque ce tube est centré dans l'alésage 19 et appuyé par son raccord 13 sur ladite collerette.

Bien entendu, le doseur distributeur 3, 11 peut être réalisé différemment du moment qu'il forme après assemblage un ensemble monolithique. Par exemple, le récipient 3 peut être formé de deux demi-coquilles dont l'une est venue de moulage avec le tube plongeur 11 ; dans ce cas, le montage consiste à assembler les deux demi-coquilles par collage, soudage par friction...

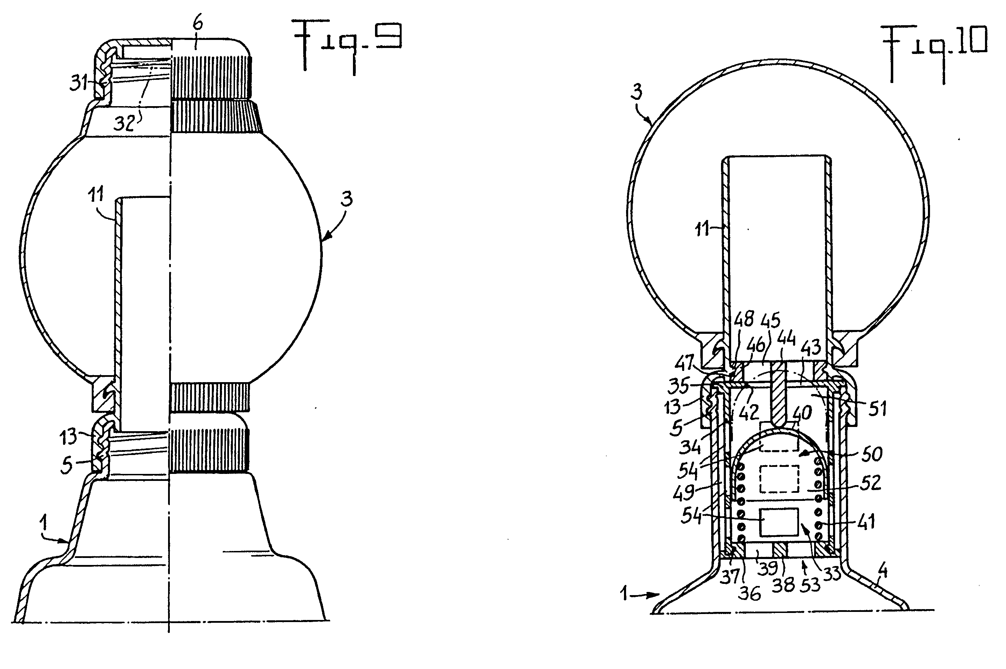

Suivant la deuxième forme de réalisation représentée sur la figure 4, le tube plongeur 11 est fermé à son extrémité libre par une cloison 22 et débouche dans la cavité interne du récipient 3 par des fenêtres latérales 23. Lorsque celui-ci est en position de dosage (figures 2 et 4), le bord supérieur des fenêtres définit le niveau n précité qui détermine la dose 12.

Suivant la troisième forme de réalisation illustrée par la figure 5, le tube plongeur 11 débouche dans la cavité interne du récipient 3 par son ouverture extrême 17 et des fenêtres latérales 23 plus étroites que précédemment.

Ces deuxième et troisième formes de réalisation permettent de régler différemment la distribution de la dose de produit dans la cuve de traitement.

Suivant la quatrième forme de réalisation schématisée sur la figure 6, l'extrémité libre du tube plongeur 11 présente en saillie interne un siège annulaire 24 délimitant l'ouverture 17 précitée. Ce siège est susceptible de coopérer avec une soupape d'obturation 25, laquelle est en matière élastique et délimite une gorge circulaire périphérique 26 s'emboîtant normalement sur ledit siège. La soupape est munie d'un lest 27 qui, dans l'exemple représenté, lui est incorporé, ce lest étant taré pour que ladite soupape cède et s'ouvre lorsque le champ centrifuge dans la cuve de traitement atteint un seuil qui est supérieur à l'intensité atteinte en lavage et inférieur à l'intensité atteinte en essorage. En outre, la soupape 25 est reliée, par une attache souple et lâche 28 s'étendant à travers le tube plongeur 11, à l'extrémité libre 14 de celui-ci.

Pour verser la dose 12 de produit dans le récipient 3, la soupape 25 doit être ouverte manuellement avant de visser le raccord 13 sur le col 5 de la bouteille. Après dosage et démontage du récipient, la soupape 25 est fermée en tirant sur l'attache 28, alors que le récipient 3 dévissé de la bouteille 1 est toujours dans la position raccord 13 en bas (figure 3).

Lorsque le récipient 3 fermé est déposé dans la cuve de la machine à laver, la dose 12 n'est pas distribuée pendant la phase de lavage, étant donné que la soupape 25 reste fermée. Pendant la phase d'essorage qui suit, ladite soupape s'ouvre sous l'action du champ centrifuge et la dose reste piégée en raison de la position prise pour l'ouverture (raccord 13 orienté vers le centre). Pendant la phase de rinçage, le récipient est balloté de façon aléatoire et la dose 12 de produit est distribuée à travers le tube 11.

Il peut être avantageux de rendre le doseur-distributeur 3, 11 imperdable et de fermer la bouteille 1 dès que ce doseur-distributeur est démonté et utilisé dans la cuve d'une machine. Le moyen illustré à titre d'exemple par la figure 8 peut être mis en oeuvre à cet effet, quelle que soit la forme de réalisation choisie (figures 1 à 6). Le raccord taraudé 13 du tube plongeur 11 est prolongé par une jupe de plus grand diamètre 29 destinée, lorsque la bouteille 1 est fermée par le capuchon taraudé 6, à être emboîtée sur celui-ci. Un verrou élastique 9, 10, du type déjà décrit, peut être prévu entre la jupe et le capuchon. Bien entendu, pour que le raccord 13 puisse être vissé sur le col fileté 5 au moment du dosage, il est nécessaire que ledit col présente avant le goulot 4, une partie intermédiaire 30 de même diamètre ou de diamètre correspondant à celui de la jupe 29 et de longueur suffisante pour que celle-ci puisse s'emboîter dessus.

Pour l'utilisation, il faut déverrouiller le doseur-distributeur 3, 11 du capuchon 6, dévisser celui-ci de la bouteille pour libérer le col 5, visser sur ce col ce doseur-distributeur, renverser la bouteille et la redresser pour introduire une dose de produit dans ledit doseur-distributeur, dévisser celui-ci et revisser le capuchon 6. La bouteille est alors fermée et le doseur-distributeur en attente prêt à l'emploi.

Si la bouteille 1 présente un col lisse 7, la tubulure 16 du tube plongeur 11 est prolongée elle aussi par une jupe 29 et le verrou élastique est alors constitué par une gorge 9 de cette jupe et par le renflement du capuchon 8 situé en regard de la gorge de ce capuchon ; la jupe est dans ce cas fendue.

Suivant le mode d'exécution illustré par la figure 9 applicable quelle que soit la forme de réalisation choisie (figures 1 à 6), le récipient 3 présente, à l'opposé du raccord taraudé 13, un embout fileté 31 identique au col fileté 5 de la bouteille. Lorsqu'on débouche celle-ci, on visse sur son col 5 le raccord 13 du récipient et sur l'embout 31 dudit récipient le capuchon 6 de la bouteille. On effectue le dosage et après redressement de la bouteille (figure 9), on dévisse le récipient, puis son capuchon et on revisse le capuchon sur la bouteille pour éviter toute perte de produit, notamment par renversement de celle-ci.

Dans ce cas, le récipient présente deux orifices opposés de distribution de la dose de produit dans la cuve de la machine à laver, accroissant de ce fait la vitesse de diffusion du produit dans le bain de lavage.

Si l'on ne veut disposer pour la distribution que de l'orifice du tube plongeur 11, l'embout 31 du récipient 3 doit présenter de moulage un siège de clipsage pour recevoir un opercule 32 fermant ledit embout 31, opercule qui est représenté en trait mixte sur la figure 9.

Bien entendu, le moyen illustré par la figure 9 est utilisable lorsque le capuchon taraudé 6 est remplacé par un capuchon lisse 8 à verrou élastique.

Suivant un autre mode d'exécution illustré par la figure 10 et applicable également quelle que soit la forme de réalisation choisie (figures 1 à 6), la bouteille 1 contient un clapet 33 à fermeture automatique et à ouverture commandée par le récipient 3 lors de son branchement.

Le clapet 33 comporte une cartouche tubulaire 34 maintenue écartée du col 5 qui dans ce cas est plus allongé que précédemment, par une collerette épaulée 35 venue de moulage sur l'extrémité extérieure de la cartouche et par une pièce ajourée 36 clipsée sur l'extrémité intérieure de cette cartouche. Dans l'exemple représenté, la pièce 36 est une rondelle rainurée pour son emboîtement élastique sur un bourrelet terminal 37 de la cartouche, cette rondelle étant reliée à un pion central 38 par un croisillon 39.

La cartouche 34 contient une coupelle hémisphérique 40 repoussée par un ressort 41 vers un siège 42 de la collerette 35 afin d'obturer un passage 43 délimité par ce siège et établissant une communication par les moyens décrits ci-après, entre le doseur distributeur 3 et la bouteille 1 lorsque ladite coupelle est escamotée par un poussoir 44. Ce poussoir 44 est venu de moulage, par l'intermédiaire d'un croisillon 45, avec une bague 46 rapportée dans le tube plongeur 11 et maintenue en place par un verrou élastique, du type à gorge 47 et bourrelet 48 par exemple. Lors du montage du doseur-distributeur 3 sur la bouteille 1 en vissant le raccord 13 sur le col fileté (figure 10) ou en emboîtant la tubulure 16 sur le col 7 à verrou élastique (figure 7), le poussoir 44 enfonce la coupelle 40 contre l'action du ressort 41 et établit la communication.

Pour cette communication, la cartouche 34 sépare une chambre périphérique 49 d'une chambre centrale 50 qui est divisée par la coupelle 40 en un compartiment aval 51 et un compartiment amont 52 débouchant respectivement par le passage obturable 43 dans le récipient 3 et par un passage permanent 53 dans la bouteille 1. Des ajourages 54 sont ménagés dans la cartouche 34 de façon à établir la communication précitée entre le compartiment amont 52 et la chambre périphérique 49, puis celle-ci et le compartiment aval 51, par conséquent entre la bouteille 1 et le récipient 3.

Dans toutes les formes de réalisation et tous les modes d'exécution décrits dans ce qui précède en se référant aux figures 1 à 10, la capacité de dosage du récipient 3 est invariable. Cette capacité qui correspond au volume de la dose 12 (figure 3) est déterminée par le niveau n (figure 2) de l'ouverture 17 (figures 2 et 6) ou 23 (figures 4 et 5) du tube plongeur 11, niveau qui est fixe lorsque ce tube fait corps avec le récipient 3.

Il peut être avantageux de rendre cette capacité de dosage réglable, pour permettre à l'utilisateur d'introduire dans le récipient 3 une dose 12 dont le volume est parfaitement adapté au traitement que ce récipient va effectuer.

A cet effet et suivant les formes de réalisation des figures 11 et 12, le tube plongeur 11 est mobile axialement relativement à la collerette épaisse ou manchon 18 du récipient 3. Il est mobile :

– soit de façon continue grâce à un filetage 55 du tube coopérant avec un taraudage 56 du manchon (figure 11),

– soit de façon échelonnée grâce à des gorges annulaires 57 du tube coopérant sélectivement avec un bourrelet discontinu 58 faisant saillie dans le manchon entre des portées cylindriques 59 (figure 12), une crémaillère annulaire étant ainsi formée.

Le filetage 55 ou le bourrelet 57 constitue un moyen de blocage en fin de réglage. Les surfaces de contact entre filetage 55 et taraudage 56 ou entre les portées cylindriques 59 du manchon et 60 du tube assurent l'étanchéité de la réserve annulaire 3d pour contenir sans fuite la dose 12 de produit avant distribution.

Des moyens permettant d'améliorer l'étanchéité peuvent être mis en oeuvre, comme par exemple une gaine 61 (figure 11) venue de moulage avec le manchon 18, entourant le tube plongeur 11 et débouchant dans le récipient 3, au-dessus du niveau de la dose 12 dans la réserve 3d.

Lorsque le tube plongeur 11 fait corps avec le récipient 3, les proportions géométriques sont telles que pour toutes les formes de réalisation représentées (exceptée celle de la figure 9 sans opercule 32), aucun risque de débordement de la dose 12 n'est à craindre quelle que soit la position dans laquelle le récipient contenant cette dose est posé en attendant la distribution.

Par contre, lorsque le tube plongeur 11 est réglable (figures 11 et 12), il faut veiller, si l'utilisateur règle le niveau n pour que la dose 12 soit relativement importante, à ce que le récipient soit posé verticalement, sinon des débordements sont à craindre.

## Revendications

1. Dispositif doseur et distributeur d'un produit fluide de traitement à déposer librement dans l'enceinte mobile d'une machine, telle que la cuve d'une machine à laver le linge, pour être balloté avec le produit à traiter en vue de diffuser progressivement dans celui-ci le produit de traitement, ce dispositif comprenant un récipient (3) de préférence sphérique prévu pour contenir une dose (12) de produit et faisant corps avec un tube plongeur (11), lequel présente une ouverture de remplissage et de distribution et est muni d'un moyen de branchement (13, 16) sur un conteneur tel qu'une bouteille (1), un bidon pour que le récipient soit disposé à l'extérieur du conteneur, caractérisé en ce que le bord de la ou des ouvertures de remplissage et de distribution (17, 23) du tube plongeur qui se trouve le plus haut placé lorsque le dispositif pend verticalement sous le moyen de branchement, est situé à un niveau (n) qui détermine dans le récipient lorsque le conteneur est retourné, la dose (12) de produit à distribuer et ce récipient (3) délimite autour dudit tube une réserve annulaire (3d) pour la distribution, réserve dans laquelle ladite dose (12) est piégée lorsque ledit conteneur est redressé pour que ledit récipient soit situé au-dessus du moyen de branchement.

2. Dispositif selon la revendication 1, caractérisé en ce que le tube plongeur (11) débouche dans le récipient (3) par son extrémité libre (17).

3. Dispositif selon la revendication 1, caractérisé en ce que le tube plongeur (11) est fermé (en 22) à son extrémité libre et débouche dans le récipient (3) par des fenêtres latérales (23).

4. Dispositif selon la revendication 1, caractérisé en ce que le tube plongeur (11) débouche dans le récipient (3) par son extrémité libre (17) et des fenêtres latérales (23).

5. Dispositif selon la revendication 2, caractérisé en ce que l'extrémité libre ouverte (17) du tube plongeur coopère avec une soupape (25) lestée (27) à fermeture élastique et ouverture commandée par la force centrifuge prenant naissance dans la cuve tournant en phase d'essorage.

6. Dispositif selon l'une quelconque des revendications 1 à 5 dont le récipient (3) et le tube plongeur (11) sont distincts et emboîtés l'un dans l'autre, caractérisé en ce que ceux-ci font corps entre eux par l'intermédiaire d'une lèvre (21) de verrouillage et d'étanchéité, faisant saillie sur l'un, déformable élastiquement et susceptible de pénétrer dans une gorge (20) de l'autre.

7. Dispositif selon l'une quelconque des revendications 1 à 5, dont le récipient (3) et le tube plongeur (11) sont distincts et emboîtés l'un dans l'autre, caractérisé en ce que ceux-ci sont mobiles axialement l'un relativement à l'autre pour modifier la capacité de dosage (12) et sont reliés entre eux par un moyen de réglage, tel qu'un filetage (55, 56), une crémaillère annulaire (57, 58).

8. Dispositif selon la revendication 7, caractérisé en ce que le récipient fait corps avec une gaine (61) entourant le tube plongeur (11) pour assurer l'étanchéité de la jonction mobile.

9. Dispositif selon l'une quelconque des revendications 1 à 5, caractérisé en ce que le moyen de branchement est une simple tubulure (16) prolongeant le tube plongeur (11) et susceptible d'être emboîtée librement sur ou dans le col (7) du conteneur (1).

10. Dispositif selon l'une quelconque des revendications 1 à 5, caractérisé en ce que le moyen de branchement est un raccord taraudé (13) prolongeant le tube plongeur (11) et susceptible d'être vissé sur le col fileté (5) du conteneur (1).

11. Dispositif selon la revendication 9, caractérisé en ce qu'un verrou élastique est interposé entre la tubulure (16) du tube plongeur (11) et le col (7) du conteneur (1), verrou qui peut être constitué par un bourrelet saillant discontinu (10) de l'un susceptible d'être engagé dans une gorge (9) de l'autre.

12. Dispositif selon la revendication 9 ou 10, caractérisé en ce que le moyen de branchement (13; 16) du tube plongeur (11) destiné à être fixé lors de l'utilisation sur le col (5 ; 7) du conteneur, est prolongé par une jupe (29) de plus grand diamètre susceptible d'être emboîtée sur un capuchon (6, 8) de bouchage du conteneur lorsqu'il est fixé sur le col de celui-ci, jupe et capuchon entre lesquels est interposé un verrou élastique pouvant être constitué par un bourrelet saillant discontinu (10) de l'un susceptible d'être engagé dans une gorge (9) de l'autre.

13. Dispositif selon l'une quelconque des revendications 9 à 12, caractérisé en ce que le récipient (3) présente sensiblement à l'opposé du moyen de branchement (13, 16) précité, un embout (31) identique au col (5, 7) du conteneur (1) et susceptible de recevoir le capuchon de bouchage (6, 8) de celui-ci.

14. Dispositif selon la revendication 13, caractérisé en ce que l'embout du récipient est un col (31) débouchant dans ce récipient (3).

15. Dispositif selon la revendication 13, caractérisé en ce que l'embout (31) du récipient est fermé par un opercule (32).

16. Dispositif selon l'une quelconque des revendications 1 à 15, caractérisé en ce que le goulot (4) du conteneur (1) contient un clapet (33) à fermeture automatique et ouverture commandée, le tube plongeur (11) étant muni d'un poussoir (44) fixe de longueur telle qu'il provoque l'ouverture de ce clapet lorsque son moyen de branchement (13, 16) est en prise avec le goulot.

17. Dispositif selon la revendication 16, caractérisé en ce que le clapet (33) comporte une cartouche tubulaire (34) montée dans le goulot (4) du conteneur (1) et séparant une chambre périphérique (49) d'une chambre centrale (50) dans laquelle une coupelle (40) est montée coulissante et repoussée par un ressort (41) contre un siège (42) entourant un passage obturable (43) dans lequel peut prendre place le poussoir (44) précité, la cartouche (34) présentant au moins un ajourage (54) qui met en communication un compartiment amont (52) de la chambre centrale (50) avec la chambre périphérique (49) et celle-ci avec un compartiment aval (51) de ladite chambre centrale (50), compartiments (52, 51) qui sont séparés par la coupelle (40) et qui débouchent respectivement par un passage permanent (53) dans le conteneur (1) et par le passage obturable (43) dans le récipient (3).

## Ansprüche

1. Dosier- und Verteilervorrichtung für ein fluides Behandlungsprodukt, welche frei in ein mobiles Gehäuse einer Maschine, wie den Bottich einer Waschmaschine, einzulegen ist, um mit dem zu behandelnden Produkt zwecks progressiven Verteilens des Behandlungsprodukts in das zu behandelnde Produkt hin- und herbewegt zu werden, welche Vorrichtung einen vorzugsweise kugelförmigen Behälter (3) umfaßt, der zur Aufnahme einer Produktdosis (12) ausgelegt und mit einem Tauchrohr (11) eine Einheit bildend ausgeführt ist, welches eine Füll- und Verteileröffnung aufweist und mit einem Abzweigmittel (13, 16) zu einem Behältnis, wie einer Flasche (1) oder einem Kanister, versehen ist, sodaß sich der Behälter außerhalb des Behältnisses befindet, dadurch gekennzeichnet, daß der Rand der Füll- und Verteileröffnung(en) (17, 23) des Tauchrohres, das sich am höchsten plaziert befindet, wenn die Vorrichtung vertikal unterhalb des Abzweigmittels hängt, in einem Niveau (n) liegt, das im Behälter bei zurückgenommenem Behältnis die zu verteilende Produktdosis (12) festlegt, und dieser Behälter (3) um das Rohr eine Ringreserve (3d) für die Verteilung begrenzt, in welcher Reserve die Dosis (12) eingefangen ist, wenn das Behältnis wieder aufgestellt ist, damit sich der Behälter oberhalb des Abzweigmittels befindet.

2. Vorrichtung nach Anspruch 1, dadurch gekennzeichnet, daß das Tauchrohr (11) mit seinem freien Ende (17) in den Behälter (3) mündet.

3. Vorrichtung nach Anspruch 1, dadurch gekennzeichnet, daß das Tauchrohr (11) an seinem freien Ende (in 22) geschlossen ist und über seitliche Fenster (23) in den Behälter (3) mündet.

4. Vorrichtung nach Anspruch 1, dadurch gekennzeichnet, daß das Tauchrohr (11) mit seinem freien Ende (17) und den seitlichen Fenstern (23) in den Behälter (3) mündet.

5. Vorrichtung nach Anspruch 2, dadurch gekennzeichnet, daß das offene freie Ende (17) des Tauchrohres mit einem Ventil (25) mit Ballast (27) zum elastischen Schließen und Öffnen, gesteuert durch die vom sich während der Schleuderphase drehenden Bottich stammenden Zentrifugalkraft, zusammenwirkt.

6. Vorrichtung nach einem der Ansprüche 1 bis 5, bei welcher der Behälter (3) und das Tauchrohr (11) separat ausgeführt und ineinandergesteckt sind, dadurch gekennzeichnet, daß die beiden unter Zwischenschaltung einer von einem der beiden abstehenden Blockier- und Dichtlippe (21), welche elastisch verformbar und in eine Rille (20) des anderen einführbar ist, miteinander eine Einheit bilden.

7. Vorrichtung nach einem der Ansprüche 1 bis 5, bei welcher der Behälter (3) und das Tauchrohr (11) separat ausgeführt und ineinandergesteckt sind, dadurch gekennzeichnet, daß die beiden zur Veränderung der Dosierkapazität (12) zueinander axial beweglich und durch ein Reguliergungsmittel, wie eine Gewindestange (55, 56), eine Ringzahnstange (57, 58), miteinander verbunden sind.

8. Vorrichtung nach Anspruch 7, dadurch gekennzeichnet, daß der Behälter eine Einheit mit einer Hülse (61) bildet, welche zwecks Gewährleistung der Dichtheit der mobilen Verbindung das Tauchrohr (11) umgibt.

9. Vorrichtung nach einem der Ansprüche 1 bis 5, dadurch gekennzeichnet, daß das Abzweigmittel ein einfacher Stutzen (16) ist, der das Tauchrohr (11) verlängert und frei auf oder in den Hals (7) des Behältnisses (19) auf- bzw. einsteckbar ist.

10. Vorrichtung nach einem der Ansprüche 1 bis 5, dadurch gekennzeichnet, daß das Abzweigmittel ein das Tauchrohr (11) verlängernder Gewindeanschluß (13) ist, welcher auf den Gewindehals (5) des Behältnisses (1) aufschraubbar ist.

11. Vorrichtung nach Anspruch 9, dadurch gekennzeichnet, daß ein elastischer Verschluß zwischen dem Stutzen (16) des Tauchrohres (11) und dem Hals (7) des Behältnisses (1) eingesetzt ist, welcher Verschluß durch einen unterbrochenen Wulst (10) gebildet sein kann, der von einem der beiden absteht und in eine Rille (9) des anderen einsetzbar ist.

12. Vorrichtung nach Anspruch 9 oder 10, dadurch gekennzeichnet, daß das während der Verwendung am Hals (5 ; 7) des Behältnisses zu befestigende Abzweigmittel (13 ; 16) des Tauchrohres (11) durch einen Mantel (29) größeren Durchmessers verlängert ist, welcher auf eine Verschlußkappe (6, 8) zum Verschließen des Behältnisses aufsteckbar ist, wenn diese am Hals desselben fixiert ist, wobei zwischem dem Mantel und der Verschlußkappe ein elastischer Verschluß vorgesehen ist, der durch einen unterbrochenen Wulst (10) gebildet ist, welcher von einem der beiden absteht und in eine Rille (9) des anderen einsetzbar ist.

13. Vorrichtung nach einem der Ansprüche 9 bis 12, dadurch gekennzeichnet, daß der Behälter (3) im wesentlichen gegenüber dem Abzweigmittel (13, 16) ein zum Hals (5, 7) des Behältnisses (1) identisches Ansatzstück (31) zur Aufnahme der Verschlußkappe (6, 8) desselben aufweist.

14. Vorrichtung nach Anspruch 13, dadurch gekennzeichnet, daß das Ansatzstück des Behälters ein in diesen Behälter (3) mündender Hals (31) ist.

15. Vorrichtung nach Anspruch 13, dadurch gekennzeichnet, daß das Ansatzstück (31) des Behälters durch ein Innenhütchen (32) verschlossen ist.

16. Vorrichtung nach einem der Ansprüche 1 bis 15, dadurch gekennzeichnet, daß der Ausguß (4) des Behältnisses (1) ein Ventil (33) mit automatischer Schließung und gesteuerter Öffnung enthält, wobei das Tauchrohr (11) mit einem festehenden Stößel (44) von einer derartigen Länge versehen ist, daß er bei Eingriff des Abzweigmittels (13, 16) das Öffnen der Klappe bewirkt.

17. Vorrichtung nach Anspruch 16, dadurch gekennzeichnet, daß das Ventil (33) eine rohrförmige Kapsel (34) aufweist, die im Ausguß (4) des Behältnisses (1) gelagert ist und eine Umfangskammer (49) von einer zentralen Kammer (50) trennt, in welcher eine Schale (40) gleitend gelagert und von einer Feder (41) an einen Sitz (42) gedrückt ist, der einen versperrbaren (43) Durchlaß umgibt, in welchem der Stößel (44) Platz finden kann, wobei die Kapsel (34) mindestens eine Aussparung (54) aufweist, die ein stromaufwärtiges Abteil (52) der zentralen Kammer (50) mit der Umfangskammer (49) und diese mit einem stromabwärtigen Abteil (51) der zentralen Kammer (50) in Kommunikation versetzt, welche Abteile (52, 51) durch die Schale (40) getrennt sind und über einen ständigen Durchlaß (53) in das Behältnis (1) bzw. über den versperrbaren Durchlaß (43) in den Behälter (3) münden.

## Claims

1. Device for dosing and dispensing a fluid treatment product to be deposited freely in the mobile enclosure of a machine, such as the tub of a washing machine, to be tossed about with the product to be treated with a view to progressively diffusing thereinto the treatment product, this device comprising a recipient (3), preferably spherical, designed to contain a dose (12) of product and being integral with a plunger tube (11), which presents an opening for filling and dispensing and is provided with a means (13, 16) for connection on a container such as a bottle (1), can... for the recipient to be disposed outside the container, characterized in that the edge of the or each filling and dispensing opening (17, 23) in the plunger tube, which is the most highly placed when the device hangs vertically beneath the connection means, is located at the level (n) which determines in the recipient, when the container is turned over, the dose (12) of product to be dispensed and said recipient (3) defines around said tube an annular reserve (3d) for dispensing, reserve in which said dose (12) is trapped when said container is straightened up for said recipient to be located above the connection means.

2. Device according to claim 1, characterized in that the plunger tube (11) opens out into the recipient (3) by its free end (17).

3. Device according to claim 1, characterized in that the plunger tube (11) is closed (in 22) at its free end and opens out into the recipient (3) by lateral windows (23).

4. Device according to claim 1, characterized in that the plunger tube (11) opens out into the recipient (3) via its free end (17) and lateral windows (23).

5. Device according to claim 2, characterized in that the open free end (17) of the plunger tube cooperates with a ballasted (27) valve (25) with elastic closure and opening controlled by the centrifugal force produced in the rotating tub in the spinning phase.

6. Device according to any one of claims 1 to 5, of which the recipient (3) and the plunger tube (11) are separate and fitted in each other, characterized in that they are connected together via a locking and sealing lip (21), projecting on one, elastically deformable and capable of penetrating in a groove (20) in the other.

7. Device according to any one of claims 1 to 5, of which the recipient (3) and plunger tube (11) are separate and fitted in each other, characterized in that they are axially mobile relatively to each other in order to modify the capacity of dosage (12) and are connected together by an adjustment means such as a thread (55, 56), an annular rack (57, 58).

8. Device according to claim 7, characterized in that the recipient is integral with a sheath (61) surrounding the plunger tube (11) in order to ensure seal of the mobile junction.

9. Device according to any one of claims 1 to 5, characterized in that the connection means is a simple tube (16) extending the plunger tube (11) and capable of being freely fitted on or in the neck (7) of the container (1).

10. Device according to claims 1 to 5, characterized in that the connection means is a tapped connection (13) extending the plunger tube (11) and capable of being screwed on the threaded neck (5) of the container (1).

11. Device according to claim 9, characterized in that an elastic lock element is interposed between the extension tube (16) of the plunger tube (11) and the neck (7) of the container (1), which lock element may be constituted by a discontinuous projecting bead (10) of one capable of being engaged in a groove (9) in the other.

12. Device according to claim 9 or 10, characterized in that the connection means (13 ; 16) of the plunger tube (11) adapted to be fixed during use on the neck (5 ; 7) of the container, is extended by a skirt (29) of larger diameter capable of being fitted on a cap (6, 8) for stopping the container when it is fixed on the neck thereof, between which skirt and cap is interposed an elastic lock element which may be constituted by a discontinuous projecting bead (10) of one capable of being engaged in a groove (9) in the other.

13. Device according to any one of claims 9 to 12, characterized in that the recipient (3) presents, substantially opposite said connection means (13, 16), an endpiece (31) identical to the neck (5, 7) of the container (1) adapted to receive the closure cap (6, 8) thereof.

14. Device according to claim 13, characterized in that the endpiece of the recipient is a neck (31) opening into this recipient (3).

15. Device according to claim 13, characterized in that the endpiece (31) of the recipient is closed by a cap (32).

16. Device according to claims 1 to 15, characterized in that the neck (4) of the container (1) contains a valve (33) with automatic closure and controlled opening, the plunger tube (11) being provided with a fixed pusher (44) of length such that it provokes opening of this valve when its connection means (13,16) is in engagement with the neck.

17. Device according to claim 16, characterized in that the valve (33) comprises a tubular cartridge (34) mounted in the neck (4) of the container (1) and separating a peripheral chamber (49) from a central chamber (50) in which a dish element (40) is mounted to slide and pushed by a spring (41) against a seat (42) surrounding a closable passage (43) in which said pusher (44) may take position, the cartridge (34) presenting at least one perforation (54) which places an upstream compartment (52) of the central chamber (50) in communication with the peripheral chamber (49) and the latter with a downstream compartment (51) of said central chamber (50), compartments (51, 52) which are separated by the dish element (40) and which respectively open out via a permanent passage (53) into the container (1) and via the closable passage (43) into the recipient (3).

Fig.3

Fig.2

Fig.1

Fig.4    Fig.5    Fig.6

EP 0 285 466 B1

Fig.8

Fig.7

Fig.9

Fig.10

EP 0 285 466 B1

Fig.12

Fig.11